# EUROPÄISCHE PATENTSCHRIFT

(11) **EP 1 276 651 B1**
(45) Veröffentlichungstag und Bekanntmachung des Hinweises auf die Patenterteilung: **12.12.2007**
(21) Anmeldenummer: 01915421.0
(22) Anmeldetag: 28.03.2001
(51) Int. Cl.: B60T 13/68, B60T 17/18

(54) **BREMSDRUCKREGELVORRICHTUNG FÜR FAHRZEUGE**
BRAKE PRESSURE REGULATING DEVICE FOR VEHICLES
DISPOSITIF DE REGULATION DE PRESSION DE FREINAGE POUR DES VEHICULES

(30) Priorität: 14.04.2000 DE 10018515
(43) Veröffentlichungstag der Anmeldung: 22.01.2003
(73) Patentinhaber: KNORR-BREMSE SYSTEME FÜR NUTZFAHRZEUGE GMBH, 80809 München (DE)
(72) Erfinder: STUMPE, Werner, 70378 Stuttgart (DE)
(86) Internationale Anmeldenummer: PCT/EP2001/003517
(87) Internationale Veröffentlichungsnummer: WO 2001/079048

(56) Entgegenhaltungen:
- EP-A- 0 110 119
- DE-A- 19 653 264
- DE-A- 19 918 070

## Beschreibung

Die vorliegende Erfindung betrifft eine Bremsdruckregelvorrichtung für Fahrzeuge, insbesondere Nutzfahrzeuge gemäß dem Oberbegriff des Patentanspruches 1.

Aus der EP 0 110 119 B1 ist eine Bremsdruckregelvorrichtung mit einem elektronischen Bremskreis und einem pneumatischen Notbremskreis bekannt. Bei intakter Bremsanlage erfolgt die Bremssteuerung rein elektronisch, wobei der Fahrer über ein Betriebsbremsventil eine Bremsanforderung vorgibt und ein Einlaßventil und ein Auslaßventil zur Beaufschlagung bzw. Entlüftung eines Bremszylinders elektronisch ansteuert. Bei intakter Bremselektronik sperrt ein elektropneumatisch gesteuertes Magnetventil, das als "Back-up-Ventil" bezeichnet werden kann und das zwischen einem pneumatischen Ausgang des Betriebsbremsventil und dem das Bremszylinder angeordnet ist, das Betriebsbremsventil gegenüber dem Bremszylinder ab. Bei einem Ausfall der Bremselektronik hingegen wird dem Bremszylinder Druck zugeführt.

Für eine Vorsteuerung wird Vorratdruck entnommen und an die Atmosphäre wieder entlüftet, wobei infolge der hohen Drücke die mechanische Beanspruchung und der Verschleiß des Back-up-Ventiles extrem hoch sind, insbesondere wenn es sich um ein Membranventil handelt. Am Eingang des Backup-Ventils liegt nämlich der vom Betriebsbremsventil ausgesteuerte Druck an und am Ausgang des Backup-Ventils steht der Bremszylinderdruck an. Die beiden Drücke sind nur in wenigen Fällen gleich, so daß beim Lösen der Bremse unerwünscht laute Entspannungsgeräusche auftreten können. Bei einem Fahrzeug, das mit einer ASR-Funktion (Antriebsschlupfregelung) ausgestattet ist, kann bei einem ASR-Eingriff der Betriebsbremsventildruck sogar Null sein. Sofern das Fahrzeug mit einem ABS-System ausgerüstet ist, kann bei einem ABS-Eingriff der elektrisch geregelte Druck, d.h. der Bremszylinderdruck Null sein. Auch bei einer normalen Bremsdruckregelung unterscheiden sich die Drücke meistens infolge einer lastabhängigen Regelung. Dennoch sollte das Backup-Ventil nicht öffnen.

Eine ähnliche Bremsdruckregelvorrichtung ist ferner aus der EP 0 250 738 B1 bekannt.

Aus der DE 27 57 539 C2 ist ein Mitteldrucksteuergerät mit vier Absperrelementen bekannt.

Aufgabe der Erfindung ist es, eine hinsichtlich Verschleiß und Geräuschentwicklung verbesserte Bremsdruckregelvorrichtung zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Der Erfindung liegt die idee zugrunde, die sich aus dem Eingangsdruck und dem Ausgangsdruck des Backup-Ventils ergebende und auf das "Schaltelement" bzw. den Ventilkörper des Backup-Ventils einwirkende resultierende Druckkraft zu verringern.

Durch eine Verringerung der resultierenden Druckkraft verringert sich nämlich die mechanische Beanspruchung, was die Lebensdauer erhöht. Ferner verringert beim Lösen der Bremse sich die Geräuschentwicklung aus dem Zylinderraum bzw. der sog. "Vorsteuerkammer" des Backup-Ventils. Auf einen zusätzlichen Geräuschdämpfer kann daher verzichtet werden. Die Erfindung ermöglicht ferner eine kompakte Baueinheit für die Backup Zu- und Abschaltung.

Der Ventilkörper des Backup-Ventils gemäß der Erfindung ist ein Schaltkolben mit einer ersten und zweiten Schaltkolbenseite. Die erste Schaltkolbenseite wird mit Betriebsbremsventildruck oder mit Bremszylinderdruck beaufschlagt und die zweite Schaltkolbenseite wird auf einer ersten Teilfläche mit Bremszylinderdruck und auf einer zweiten Teilfläche mit Betriebsbremsventildruck beaufschlagt. Die auf die beiden Seiten des Schaltkolbens einwirkenden Drücke heben sich somit teilweise auf. Im Vergleich zum Stand der Technik wird hierdurch eine Verringerung der effektiven Druckkraft auf den Schaltkolben erreicht.

Bei intakter Bremsanlage sperrt das Back-up-Ventil, d.h. der Schaltkolben sperrt das Betriebsbremsventil gegenüber dem Bremszylinder ab, wobei die Bremsdruckregelung rein elektronisch über ein Belüftungsventil und ein Entlüftungsventil erfolgt. Am Eingang des Backup-Ventils liegt also der Betriebsbremsventildruck an und am Ausgang der momentan herrschende Bremszylinderdruck. Bei dem Back-up-Ventil gemäß der Erfindung ist sichergestellt, daß bei intakter Bremsanlage auf die erste Seite des Schaltkolbens der höhere der beiden Drücke einwirkt und auf Teilflächen der anderen Seite des Schaltkolbens jeweils einer der beiden Drücke. Die sich hierdurch ergebende resultierende Druckkraft drückt den Schaltkolben des Backup-Ventils gegen den Ventilsitz, d.h. der Schaltkolben sperrt den Betriebsbremsventildruck gegenüber dem Bremszylinder ab.

Bei einem Ausfall bzw. einer Störung der elektronischen Bremssteuerung hingegen muß eine pneumatische Bremsdrucksteuerung möglich sein, d.h. der Betriebsbremsventildruck muß über das Back-up-Ventil zum Bremszylinder durchgesteuert werden. Gemäß der Erfindung liegt in diesem Fall auf der ersten Seite des Schaltkolbens der niedrigere der beiden Drücke an, wodurch sichergestellt ist, daß der Schaltkolben "durchsteuert" und die Druckverbindung zwischen Betriebsbremsventil und Bremszylinder öffnet.

Nach einer Weiterbildung der Erfindung ist eine Druckauswahleinrichtung vorgesehen, die einen Hochdruckausgang und einen Niederdruckausgang aufweist. Je nachdem, welcher der beiden Drücke höher ist, liegt am Hochdruckausgang der Betriebsbremsventildruck und am Niederdruckausgang der Bremszylinderdruck an oder umgekehrt.

Nach einer Weiterbildung der Erfindung ist ein Magnetventil vorgesehen, das bei einer elektronisch gesteuerten Betriebsbremsung, d.h. bei intakter Bremselektronik den Hochdruckausgang zur ersten Seite des Schaltkolbens durchsteuert und das bei einer Störung der Bremselektronik den Niederdruckausgang zur ersten Seite des Schaltkolbens durchsteuert. Diesem Magnetventil weist einen stromlos offenen und einen stromlos geschlossenen Eingang auf, wobei durch die Druckauswahleinrichtung dem stromlos geschlossenen Eingang der höhere Druck und dem stromlos offenen der neidriegere Druck zugeführt wird.

Das Magnetventil weist beispielsweise einen federvorgespannten Magnetanker auf, der in erregtem Zustand den Niederdruckausgang und in nicht erregtem Zustand den Hochdruckausgang der Druckauswahleinrichtung gegenüber den Schaltkolben absperrt.

Nach einer Weiterbildung der Erfindung weist die Druckauswahleinrichtung ein Hochdruckauswahlventil und ein Niederdruckauswahlventil auf. Das Hochdruckauswahlventil kann beispielsweise ein Kugelventil mit einer einzelnen Kugel sein, das je nach Druckhöhe den Betriebsbremsventildruck bzw. den Bremszylinderdruck zum Hochdruckausgang durchsteuert. Das Niederdruckauswahlventil kann beispielsweise ein Kugelventil mit zwei miteinander verbundenen Kugelkörpern sein, zwischen denen der Niederdruckausgang liegt. Je nach Druckniveau sperrt einer der beiden Ventilkörper den höheren der beiden Drücke ab, so daß am Niederdruckausgang stets der niedrigere der beiden Drücke anliegt. Anstatt kugelförmiger Ventilkörper können natürlich auch andere Ventilkörper bzw. Steuerelemente verwendet werden.

Alternativ dazu kann die Druckauswahleinrichtung auch durch mehrere einzelne Ventile gebildet sein. Es kann beispielsweise eine Gruppe von Membranventilen vorgesehen sein, die aus den beiden Eingangsdrücken, d.h. dem Betriebsbremsventildruck und dem Bremszylinderdruck den höheren bzw. niedrigeren Druck auswählt.

Nach einer Weiterbildung der Erfindung kann die Druckauswahleinrichtung in das Backup-Ventil integriert sein, insbesondere in den Schaltkolben des Backup-Ventils. Dies ermöglicht eine sehr kompakte Bauweise. Alternativ dazu ist auch eine separate Anordnung möglich.

Im folgenden wird die Erfindung anhand von Ausführungsbeispielen im Zusammenhang mit der Zeichnung näher erläutert. Es zeigen:
- Fig.1: das Schaltschema, einer Bremsdruckregelvorrichtung gemäß der Erfindung, insbesondere die Anordnung des Backup-Ventils;
- Fig. 2: ein erstes Ausführungsbeispiel der Erfindung mit Kugelventilen;
- Fig. 3: ein Ausführungsbeispiel mit Membranventilen;
- Fig. 4: Ausführungsbeispiel mit in den Schaltkolben integrierter Druckauswahleinrichtung;
- Fig. 5: die Stellung der Membranventile der Fig. 4 in einem ersten Druckzustand;
- Fig. 6: die Stellung der Membranventile der Fig. 4 in einem zweiten Druckzustand;
- Fig. 7: die Anordnung der Membranventile der Fig. 4-6 in schematischer Darstellung;
- Fig. 8: ein weiteres Ausführungsbeispiel in schematischer Darstellung;
- Fig. 9: ein weiteres Ausführungsbeispiel in schematischer Darstellung;und
- Fig. 10: ein Ausführungsbeispiel mit in den Schaltkolben integrierten Kugelventilen.

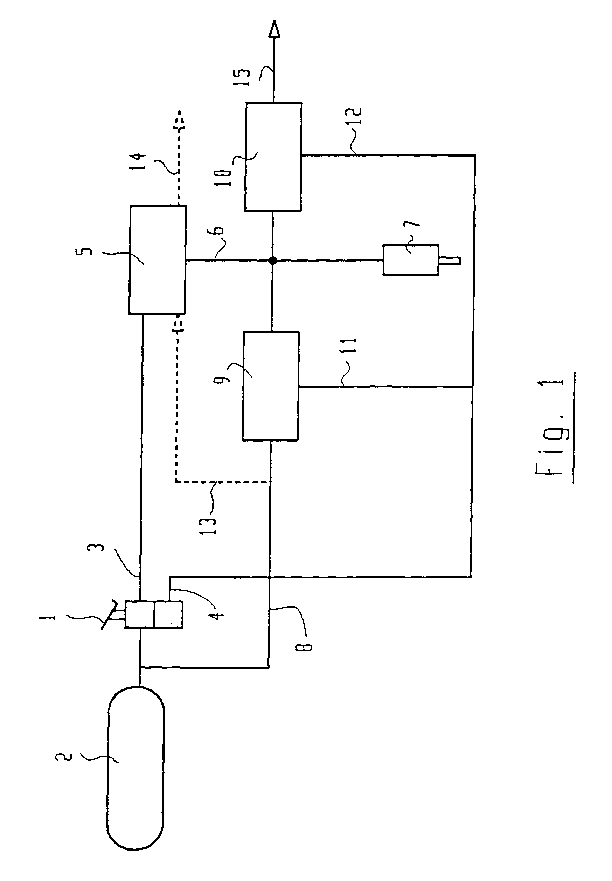

Fig. 1 zeigt das der Erfindung zugrundeliegende Schaltschema mit einem Betriebsbremsventil 1, dem von einem Vorratsdruckbehälter 2 Vorratsdruck zugeführt wird und das einen pneumatischen Ausgang 3 sowie einen elektronischen Ausgang 4 aufweist. Der pneumatische Ausgang 3 ist mit einem Backup-Ventil 5 verbunden, das über eine pneumatische Leitung 6 mit einem Bremszylinder 7 in Verbindung steht.

Der Vorratsdruckbehälter 2 ist über eine pneumatische Leitung 8 mit einem Belüftungs- bzw. Einlaßventil 9 verbunden, das zur Bremsdruckbeaufschlagung des Bremszylinders 7 vorgesehen ist. Der Bremszylinder 7 steht ferner mit einem Entlüftungsventil 10 in Druckverbindung, das ein Lösen der Bremse ermöglicht. Das Einlaßventil 9 und das Auslaßventil 10 sind jeweils über eine elektrische Leitung 11 bzw. 12 mit dem elektrischen Ausgang 4 des Betriebsbremsventils verbunden und können wie z.B. in der eingangs genannten EP 0 110 119 auch in ein gemeinsames Ventil integriert sein.

Bei intakter Bremsanlage erfolgt die Bremsdrucksteuerung rein elektronisch über den elektrischen Ausgang 4 bzw. das Einlaßventil 9 und das Auslaßventil 10. Das Backup-Ventil 5 befindet sich dabei in Sperrstellung und sperrt den Betriebsbremsventildruck gegenüber dem Bremszylinderdruck ab. Bei einem Ausfall der Bremselektronik erfolgt die Bremsdrucksteuerung pneumatisch über das Backup-Ventil 5. Das Backup-Ventil 5 kann über den pneumatischen Ausgang 3 angesteuert und über eine pneumatische Leitung 13 mit Vorratsdruck versorgt werden. Der Bremsdruck kann auch direkt über den pneumatischen Ausgang 3 zugeführt werden. Das Backup-Ventil 5 und das Auslaßventil 10 weisen jeweils eine Entlüftung 14 bzw. 15 auf.

Ausgeführt wird die Sperrung des Backup-Kreises bei einer elektrischen Druckeinsteuerung mit Unterstützung der Vorratsluft und entlüftet wird an die Atmosphäre, wie durch die Entlüftung 14 dargestellt ist.

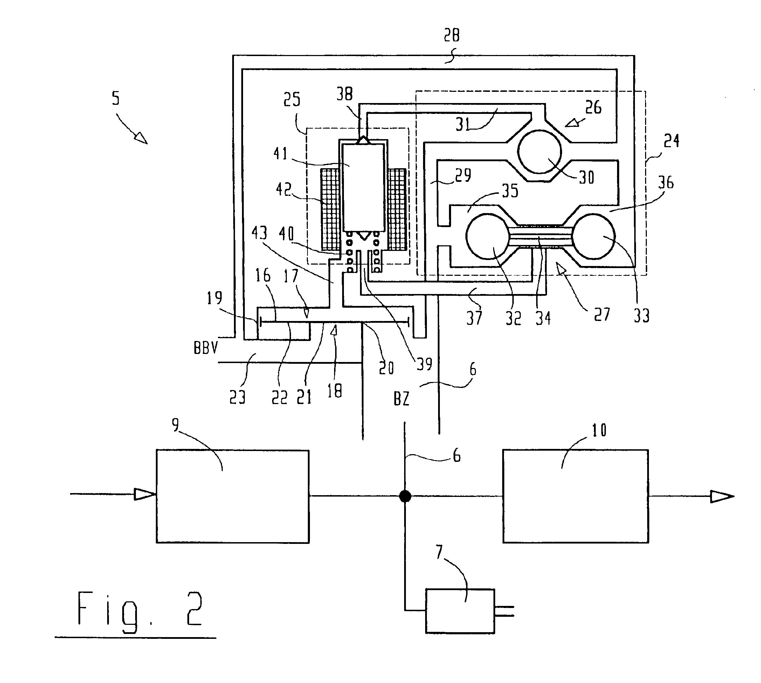

Fig. 2 zeigt ein erstes Ausführungsbeispiel des Backup-Ventils 5 der Fig. 1. Das Backup-Ventil 5 weist einen Schaltkolben 16 mit einer ersten Kolbenseite 17 und einer zweiten Kolbenseite 18 auf. Der Schaltkolben 16 ist in einem Zylindergehäuse 19 verschieblich. In der hier gezeigten Stellung liegt der Schaltkolben 16 an einem Ventilsitz 20 an. Das Zylindergehäuse 19 und der Ventilsitz 20 "unterteilen" die zweite Seite des Schaltkolbens 16 in eine Kreisfläche 21 und eine Ringfläche 22. An der Kreisfläche 21 steht der in einer Leitung 23 herrschende Betriebsbremsventildruck an. An der Ringfläche 22 hingegen steht der in der pneumatischen Leitung 6, die mit dem Bremszylinder 7 verbunden ist, herrschende Bremszylinderdruck BZ an.

Das Backup-Ventil 5 weist ferner eine Druckauswahleinrichtung 24 und ein Magnetventil 25 auf.

Die Druckauswahleinrichtung 24 weist ein Hochdruckauswahlventil 26 und ein Niederdruckauswahlventil 27 auf. Dem Hochdruckauswahlventil 26 wird über eine Leitung 28 der Betriebsbremsventildruck BBV und über eine Leitung 29 Bremszylinderdruck BZ zugeführt. Ein Ventilkörper 30 des Hochdruckauswahlventils 26 wird von dem höheren der beiden Drücke in eine erste bzw. zweite Ventilstellung gedrückt, so daß an einem Hochdruckausgang 26 stets der höhere der beiden Drücke anliegt.

Das Niederdruckauswahlventil 27 weist zwei Ventilkörper 32, 33 auf, die über eine Stange 34 miteinander verbunden sind. Ferner ist ein erster Ventilraum 35 vorgesehen, der mit der Leitung 29, d.h. mit dem im Bremszylinder 7 herrschenden Druck BZ in Verbindung steht und ein zweiter Ventilraum 36, der über die Leitung 28 mit dem Betriebsbremsventildruck BBV beaufschlagt wird. Je nachdem, welcher von beiden Drücken der beiden Drücke größer ist, nimmt das Niederdruckauswahlventil 27 eine erste bzw. zweite Ventilstellung ein.

Zwischen den beiden Ventilkörpern 32, 33 ist ein Niederdruckausgang 37 vorgesehen. Am Niederdruckausgang 37 liegt stets der kleinere der beiden Drücke an.

Alternativ zu dem hier gezeigten Ausführungsbeispiel, bei dem die Druckauswahleinrichtung durch zwei "Kugelventile" gebildet ist, können auch andere Ventilkörper bzw. Membranventile vorgesehen sein, was noch ausführlich erläutert wird.

Das Magnetventil 25 ist ein 3/2-Magnetventil und weist einen ersten Eingang 38 auf, der mit dem Hochdruckausgang 31 verbunden ist und einen zweiten Eingang 39, der mit dem Niederdruckausgang 37 verbunden ist. Ferner ist ein durch eine Feder 40 vorgespannter Magnetanker 41 vorgesehen, der durch einen Elektromagnet 42 über Kraft verschiebbar ist. In der hier gezeigten stromlosen Grundstellung des Magnetventils 25 sperrt der Magnetanker 41 den ersten Eingang 38 ab. Der Niederdruckausgang 37 steht über den zweiten Eingang 39 eine Verbindungsleitung 43 mit der ersten Kolbenseite 17 in Druckverbindung.

In erregtem, d.h. bestromten Zustand des Magnetventils 25 sperrt der Magnetanker 41 den Eingang 39 ab. In diesem Fall steht an der ersten Kolbenseite 17 der über den Eingang 38 zugeführte höhere Druck an.

Im folgenden wird die Funktionsweise näher erläutert. Bei intakter Bremsanlage erfolgt die Bremsdrucksteuerung rein elektronisch über das Einlaßventil 9 bzw. das Auslaßventil 10. Der in den Leitungen 23 bzw. 28 herrschende Betriebsbremsventildruck wird durch den Schaltkolben 16 gegenüber der Leitung 6 abgesperrt. Das Magnetventil 25 befindet sich in erregtem Zustand, d.h. der Magnetanker 41 ist in seiner "unteren" Stellung, in der der Eingang 39 abgesperrt ist. Die erste Seite des Schaltkolbens 17 wird somit vollflächig mit dem vom Hochdruckauswahlventil ausgewählten Maximaldruck beaufschlagt. Hierbei sind folgende Fälle zu unterscheiden:
1. Betriebsbremsventildruck BBV > Bremszylinderdruck BZ
   Der Betriebsbremsventildruck BBV drückt den Ventilkörper 30 des Hochdruckauswahlventils 26 in seine "linke" Stellung, d.h. am Hochdruckausgang 31 bzw. an der ersten Kolbenseite 17 steht der Betriebsbremsventildruck BBV an. Der Betriebsbremsventildruck BBV steht ferner an der Kreisfläche 21 an. An der Ringfläche 22 hingegen steht der kleinere Bremszylinderdruck BZ an. Die auf den Schaltkolben 16 wirkende resultierende Druckkraft ergibt sich somit aus dem Betriebsbremsventildruck BBV multipliziert mit der Ringfläche 22.
   Das Niederdruckauswahlventil 27 befindet sich in diesem Fall ebenfalls in seiner "linken" Stellung, d.h. an dem durch den Magnetanker 41 abgesperrten Eingang 39 liegt der Bremszylinderdruck BZ an.
2. Betriebsbremsventildruck BBV < Bremszylinderdruck BZ
   In diesem Fall befindet sich das Hochdruckauswahlventil 26 in seiner "rechten" Stellung, d.h. der in der Leitung 6 herrschende Bremszylinderdruck BZ steht am Hochdruckausgang 31 bzw. an der ersten Kolbenseite 17 an. Das Niederdruckauswahlventil 27 befindet sich ebenfalls in seiner "rechten" Stellung, d.h. am Niederdruckausgang 37 bzw. an dem durch den Magnetanker 41 abgesperrten Eingang 39 des Magnetventils 25 steht der in den Leitungen 23 bzw. 28 herrschende Betriebsbremsventildruck BBV an.

In beiden Fällen ist somit sichergestellt, daß an der ersten Kolbenseite 17 jeweils der höhere von beiden Drücken anliegt. Der Schaltkolben 16 befindet sich somit in der hier gezeigten Stellung, in der der Betriebsbremsventildruck BBV gegenüber dem Bremszylinderdruck BZ abgesperrt ist. Bei einem Ausfall der Bremselektronik befindet sich der Magnetanker 41 in der in Fig. 2 gezeigten "nicht erregten" bzw. stromlosen Stellung. Die Feder 40 drückt den Magnetanker 41 "nach oben" und sperrt den Eingang 38 ab. In diesem Fall steht an der ersten Seite 17 des Schaltkolbens 16 der kleinere der beiden Drücke an.

Betätigt der Fahrer bei ausgefallener Bremselektronik das Bremspedal, so wird Betriebsbremsventildruck über die Leitung 23 zugeführt. Der Betriebsbremsventildruck ist in diesem Fall größer als der Bremszylinderdruck. Dementsprechend wird der Schaltkolben 16 "nach oben" gedrückt, d.h. der Betriebsbremsventildruck strömt über die Leitungen 23 bzw. 6 zum Bremszylinder 7.

Das Backup-Ventil 5 überwacht somit mit dem Schaltkolben 16 den Luftdurchgang zwischen dem Betriebsbremsventil und dem Bremszylinder. Im Normalbetrieb, d.h. bei einer elektronischen Bremsdrucksteuerung wird der Durchgang getrennt. Im Notfall, d.h. ohne elektrische Druckansteuerung, wird bei einer Betätigung des Betriebsbremsventils die Verbindung zum Bremszylinder 7 geöffnet. Die Sperrung mit Hilfe des Schaltkolbens 16 erfolgt, indem auf der ersten Kolbenseite der maximale Druck, d.h. der Betriebsbremsventildruck BBV oder der Bremszylinderdruck BZ anliegt und auf der anderen Kolbenseite 18 auf der Teilfläche 21 der Betriebsbremsventildruck BBV und auf der Teilfläche 22 der Bremszylinderdruck BZ.

Mit anderen Worten sind beim Ausführungsbeispiel der Fig. 2 sind ein Wechselventil (MAX-Wert; ODER-Funktion) und ein Zuschaltventil (MIN-Wert; UND-Funktion) vorgesehen. Beiden Ventilen wird an einer Seite der Druck vom Betriebsbremsventil und an der anderen Seite der elektrisch geregelte Druck zugeführt. Der jeweilige Max- und Min-Druck wird dem Magnetventil zugeführt. Vom Magnetventil 25 besteht eine Verbindung zum Schaltkolben des Backup-Ventiles.

Bei Fig. 2 wird also einem Wechselventil (oben) an einer Seite der Druck vom Betriebsbremsventil und an der anderen Seite der elektrisch eingestellte Druck zugeführt. Dadurch steht an der einen Seite des Magnetventiles immer der maximale Systemdruck an. Der minimale Systemdruck wird durch ein entsprechendes Ventil (unten) ausgewählt, bei dem der maximale Druck ein Ventilteil schließt und dadurch der minimale Druck an der anderen Seite des Magnetventils ansteht. Anstatt der Kugelventile können auch Membranventile verwendet werden.

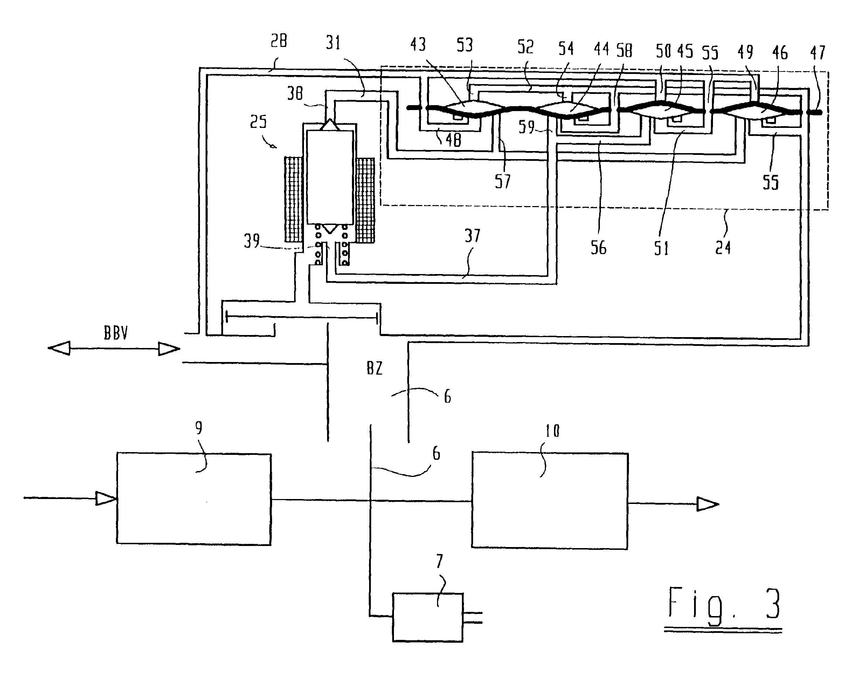

Fig. 3 zeigt ein Ausführungsbeispiel, bei dem die Druckauswahleinrichtung 24 durch ein erstes Membranventil 43, ein zweites Membranventil 44, ein drittes Membranventil 45 und ein viertes Membranventil 46 gebildet ist. Die Ventile 43-46 weisen hier eine einstückige Membran 47 auf. Der in der Leitung 28 herrschende Betriebsbremsventildruck BBV steht über eine Stichleitung 48 am ersten Membranventil 43 sowie über eine Stichleitung 49 am vierten Membranventil 46 an. Der Betriebsbremsventildruck steht ferner über Stichleitungen 50, 51 am dritten Membranventil 45 an.

Die Leitung 6 steht mit einer Leitung 52 in Verbindung, von der Stichleitungen 53 bzw. 54 zum ersten Membranventil 43 bzw. vom zweiten Membranventil 44 abzweigen. Über eine Leitung 55 stehen die Leitungen 6 bzw. 52 mit dem vierten Membranventil 46 in Verbindung. In der gezeigten Ventilstellung besteht somit eine Druckverbindung zwischen den Leitungen 6, 52, 55, dem vierten Membranventil 46 und dem Hochdruckausgang 31 der Druckauswahleinrichtung 24. Am Eingang 38 des Magnetventils 25 steht somit der Bremszylinderdruck BZ an.

Von der Leitung 28, in der der Betriebsbremsventildruck herrscht, zweigt ferner eine Stichleitung 55 ab, die über das dritte Membranventil 45 mit einer Leitung 56 und dem Niederdruckausgang 37 der Druckauswahleinrichtung 24 in Verbindung steht. Am Eingang 39 des Magnetventils 25 steht somit der Betriebsbremsventildruck BBV an.

Ist der Betriebsbremsventildruck BBV größer als der Bremszylinderdruck, so gehen die Membranventile 43-46 jeweils in die andere Ventilstellung (nicht dargestellt). Der Betriebsbremsventildruck BBV gelangt dann über die Leitungen 28, 48 zum ersten Membranventil 43 und von dort über eine Stichleitung 57 zum Hochdruckausgang 24. Durch das vierte Membranventil 46 ist dann der Hochdruckausgang 24 gegenüber der Leitung 55 abgesperrt.

Dementsprechend gelangt der Bremszylinderdruck BZ über die Leitungen 6 und eine Stichleitung 58 zum zweiten Membranventil 44 und von dort über eine Stichleitung 59 zum Niederdruckausgang 37.

Beim Ausführungsbeispiel der Fig. 3 sind somit vier Ventilelemente 43-46 zur Max-/Min-Auswahl (Gleichschaltung) vorgesehen. Die Ventilelemente 43-46 bestehen z.B. aus je einer Schaltmembran, die auf der einen Seite vom Schaltdruck beaufschlagt ist und auf der anderen Seite den Durchgang eines Luftkanals steuert. Zwei dieser Ventile werden vom Bremszylinder-Kanal gesteuert, die anderen beiden vom Betriebsbremsventil-Kanal. Die Kanäle sind untereinander logisch so verknüpft, daß sich eine Trennung in Max/Min-Druck ergibt.

Mit anderen Worten zeigt Fig. 3 ein Ausführungsbeispiel für eine Min/Max-Auswahl durch eine logische Verknüpfung von vier Schaltelementen. Zwei der Schaltmembranen werden vom Betriebsbremsventildruck geschaltet, die beiden anderen vom elektrisch eingesteuerten Druck. Bei kleinerem Betriebsbremsventildruck wird an dem einen Schaltelement 46 die Öffnung für den größeren elektrisch eingesteuerten Druck freigegeben und auf die "Maximum-Seite" des Magnetventils geführt. Am zweiten Schaltelement 45 ist die "Minimum-Seite" des Magnetventils mit dem kleineren Betriebsbremsventildruck verbunden. Die Schaltelemente 43, 44 sperren die unten liegenden Übergänge durch den höheren elektrisch angesteuerten Druck. Wird der elektrisch angesteuerte Druck kleiner als der Betriebsbremsventildruck, dann wechseln die linken und rechten Schaltelemente ihre Lage. Der dann größere Betriebsbremsventildruck wird dann der "Maximum-Seite" des Magnetventils zugeführt und die "Minimum-Seite" mit dem elektrisch eingesteuerten Druck verbunden.

Bei den Ausführungsbeispielen der Fig. 2 und 3 wird aus dem Betriebsbremsventildruck bzw. dem Bremszylinderdruck der jeweils höhere Druck ausgewählt und als Schaltdruck verwendet. Hierbei werden separat angeordnete Max/Min-Auswahlventile verwendet. Die Vorsteuerung erfolgt mit einem 3/2-Magnetventil.

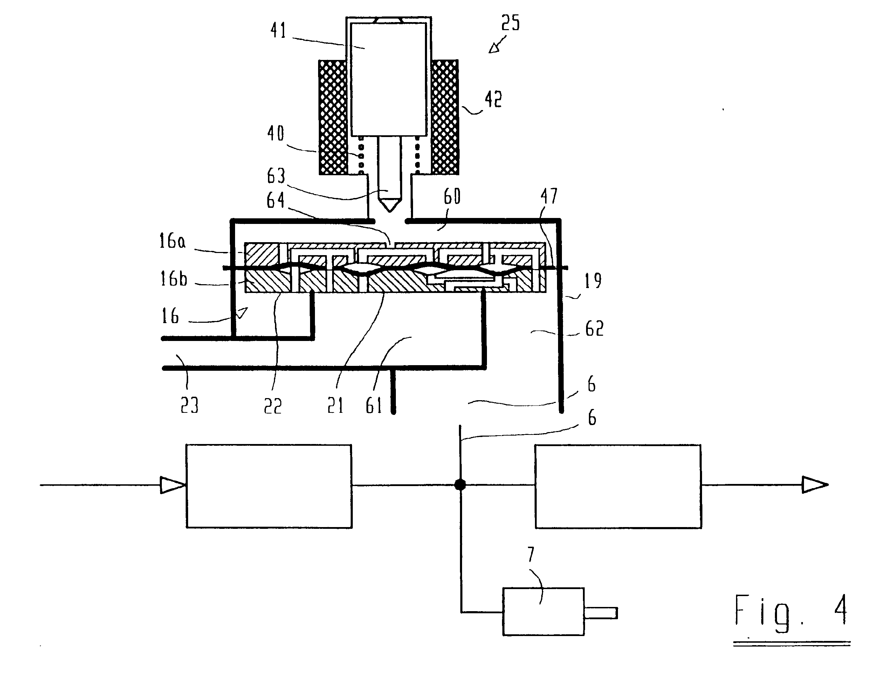

Demgegenüber sind bei den folgenden Ausführungsbeispielen der Fig. 4-10 die Max/Min-Auswahlventile in den Schaltkolben integriert. Hierdurch verringern sich die erforderlichen Luftkanäle im Gehäuse. Ferner genügt bei diesen Ausführungsbeispielen ein 2/2-Magnetventil.

Fig. 4 zeigt ein erstes Ausführungsbeispiel, bei dem die Druckauswahleinrichtung in den Schaltkolben 16 integriert ist, der hier aus einer oberen Schaltkolbenhälfte 16a und einer unteren Schaltkolbenhälfte 16b besteht. Zwischen den beiden Schaltkolbenhälften 16a, 16b ist die elastische Membran 47 geklemmt, die seitlich aus dem Schaltkolben 16 herausragt und luftdicht mit dem Zylindergehäuse 19 verbunden ist. Der Schaltkolben 16 bzw. die Membran 47 "unterteilen" das Zylindergehäuse 19 somit in einen oberen Zylinderraum 60 und zwei untere Zylinderräume 61, 62. Der Zylinderraum 61 ist in der in Fig. 4 gezeigten Stellung des Schaltkolbens 16 durch die Kreisfläche 21 begrenzt und geht in die Leitung 23 über. Der Zylinderraum 62 ist durch die Ringfläche 22 des Schaltkolbens 16 begrenzt und geht in die pneumatische Leitung 6 über, die mit dem Bremszylinder 7 verbunden ist.

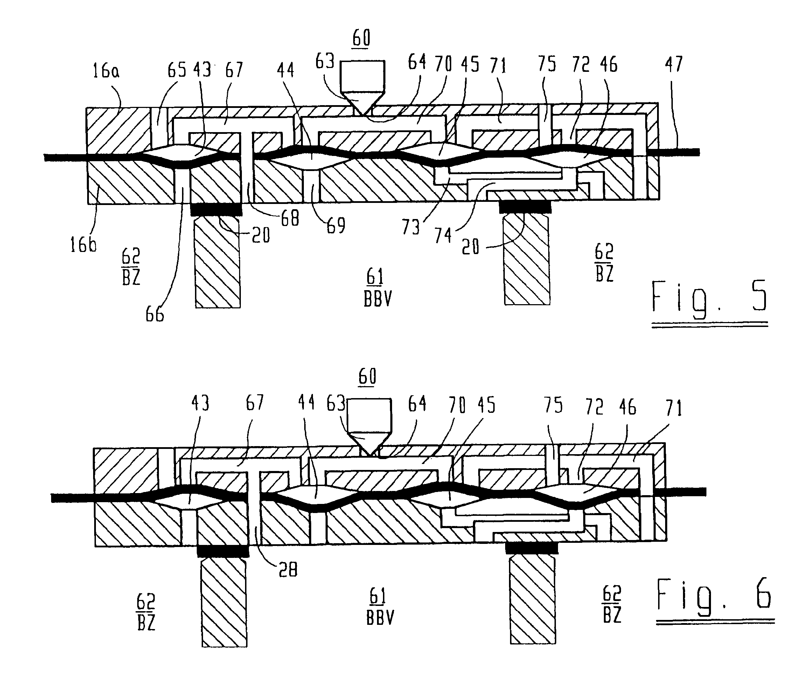

Einzelheiten des Schaltkolbens 16 werden unten im Zusammenhang mit den vergrößerten Darstellungen der Fig. 5 und 6 näher erläutert.

In Fig. 4 weist das Magnetventil 25 einen Magnetanker 41 auf, der entsprechend dem Ausführungsbeispiel der Fig. 2 durch eine Feder 40 vorgespannt ist. An der Unterseite des Magnetankers 41 ist ein Ventilstößel 63 vorgesehen. In erregtem Zustand wird der Magnetanker 41 durch den Elektromagnet 42 entgegen der Federkraft nach unten gezogen und der Ventilstößel 63 verschließt dann eine Öffnung 64, die an der Oberseite des Schaltkolbens 16 vorgesehen ist. Im Gegensatz zu den Ausführungsbeispielen der Fig. 2 und 3 handelt es sich beim Magnetventil 25 der Fig. 4 um ein "einseitig" wirkendes Magnetventil.

Fig. 5 zeigt den Schaltkolben 16 der Fig. 4 in vergrößerter Darstellung. Entsprechend der in Fig. 4 gezeigten Stellung des Schaltkolbens sitzt die untere Schaltkolbenhälfte 16b auf dem Ventilsitz 20 der Leitung 23 auf. Folglich herrscht im unteren Zylinderraum 61 Betriebsbremsventildruck. Im ringförmigen unteren Zylinderraum 62 hingegen herrscht Bremszylinderdruck (vgl. Fig. 4).

In den Schaltkolben 16 sind hier vier Membranventile 43-46 integriert.

In der in Fig. 5 gezeigten Stellung der Membranventile 43-46 ist der Betriebsbremsventildruck, der im unteren Zylinderraum 61 herrscht, größer als der im ringförmigen Zylinderraum 62 herrschende Bremszylinderdruck. Dementsprechend liegt die Membran der Membranventile 43 und 45 an der unteren Schaltkolbenhälfte 16b und die Membran 47 der Membranventile 44 und 46 an der oberen Schaltkolbenhälfte 16a an.

Das erste Membranventil 43 steht über eine Stichleitung 65 mit dem oberen Zylinderraum 60 in Druckverbindung, über eine Stichleitung 66 mit dem unteren ringförmigen Zylinderraum 62 und über eine Verbindungsleitung 67 mit dem zweiten Membranventil 44. Von der die beiden Membranventile 43, 44 verbindenden Leitung führt eine Stichleitung 68 in den unteren Zylinderraum 61.

Das zweite Membranventil 44 ist über eine Stichleitung 69 ebenfalls mit dem unteren Zylinderraum 61 verbunden. Über eine Verbindungsleitung 70 sind das zweite Membranventil 44 und das dritte Membranventil 45 verbunden. Die Öffnung 64, die ebenfalls mit der Verbindungsleitung 70 in Druckverbindung steht, ist hier durch den Ventilstößel 63 verschlossen, d.h. in den Fig. 5 und 6 befindet sich das Magnetventil 25 (vgl. Fig. 4) in erregtem Zustand.

Das dritte Membranventil 45 steht über eine Verbindungsleitung 71 mit dem ringförmigen Zylinderraum 62 und über eine Stichleitung 72 mit dem vierten Membranventil 46 in Druckverbindung. Ferner ist eine weitere Verbindungsleitung 73 zwischen dem dritten Membranventil 45 und dem ringförmigen Zylinderraum 62 vorgesehen.

Das vierte Membranventil 46 steht über die Stichleitung 72 bzw. über die Verbindungsleitung 71 mit dem ringförmigen Zylinderraum 62 in Druckverbindung und über eine weitere Verbindungsleitung 74 im Zylinderraum 61.

Vom vierten Membranventil 46 führt ferner eine Stichleitung 75 in den oberen Zylinderraum 60.

Im oberen Zylinderraum 60 herrscht bei der in Fig. 5 gezeigten Stellung der Magnetventile 43-46 der Betriebsbremsventildruck BBV. Zwischen dem unteren Zylinderraum 61 besteht nämlich über die Stichleitung 68, die Verbindungsleitung 67, das erste Membranventil 43 und die Stichleitung 65 eine Druckverbindung zum oberen Zylinderraum 60. Der untere ringförmige Zylinderraum 62 hingegen ist über die Membranventile 43, 44 und 45 gegenüber dem oberen Zylinderraum abgesperrt.

Fig. 6 zeigt den Schaltkolben 16, wobei sich die Membranventile 43-46 jeweils in ihrer anderen Stellung befinden. Diese Ventilstellungen liegen dann vor, wenn der Bremszylinderdruck BZ, der im unteren Zylinderraum 62 herrscht, größer als der Betriebsbremsventildruck BBV ist, der im unteren Zylinderraum 61 herrscht. In diesem Fall herrscht im oberen Zylinderraum 60 der höhere der beiden Drücke, d.h. Bremszylinderdruck. Bei der in Fig. 6 gezeigten Stellung der Membranventile 43-46 besteht nämlich über die Verbindungsleitung 71, die Stichleitung 72, das Membranventil 46 und die Stichleitung 75 eine Druckverbindung. Der Zylinderraum 61 hingegen ist über die Membranventile 43-45 und den Ventilstößel 63 gegenüber dem oberen Zylinderraum 60 abgesperrt.

Auch bei dem in den Fig. 4-6 gezeigten Ausführungsbeispiel ist somit sichergestellt, daß bei intakter Bremselektronik, d.h. bei erregtem Magnetventil 25 im oberen Zylinderraum 60 stets der höhere der beiden Drücke BBV bzw. BZ herrscht.

Bei einem Ausfall der Bremselektronik bzw. des Magnetventils 25 geht der Magnetanker in seine in Fig. 4 gezeigte Grundstellung, d.h. die Öffnung 64 ist dann nicht abgesperrt. In diesem Fall ist durch die Membranventile 43-46 sichergestellt, daß im oberen Zylinderraum der kleinere der beiden Drücke BBV-BZ herrscht. Auch hier sind folgende zwei Fälle zu unterscheiden:

### Betriebsbremsventildruck BBV > Bremszylinderdruck BZ (Fig. 5)

Bei nicht erregtem Magnetventil 25 besteht dann nämlich über die Verbindungsleitung 71, das Magnetventil 45, die Verbindungsleitung 70 und die dann offene Öffnung 64 eine Druckverbindung zwischen dem ringförmigen Zylinderraum 62 und dem oberen Zylinderraum 60.

Wird bei einem Ausfall der Bremselektronik pneumatisch Druck über den Zylinderraum 61 eingesteuert, so besteht über die Stichleitung 68, die Verbindungsleitung 67, das Magnetventil 43, die Stichleitung 65, den oberen Zylinderraum 60, die Öffnung 64, die Verbindungsleitung 70, das Magnetventil 45 und die Verbindungsleitung 71 eine Druckverbindung zwischen den Zylinderräumen 61 und 62. Zusätzlich wird der Schaltkolben 16 durch den Betriebsbremsventildruck BBV nach oben gedrückt, so daß unmittelbar Druckluft vom Zylinderraum 61 über den Ventilsitz 20 in den Zylinderraum 62 und weiter zum Bremszylinder 7 strömen kann.

### Betriebsbremsventildruck BBV < Bremszylinderdruck BZ (Fig. 6)

Bei nicht erregtem Magnetventil 25 besteht hier über die Stichleitung 28, die Verbindungsleitung 67, das Magnetventil 44, die Verbindungsleitung 70 und die Öffnung 64 eine Druckverbindung zwischen dem Zylinderraum 61 und dem oberen Zylinderraum 60.

Bei erregtem Magnetventil 45, d.h. wenn die Öffnung 64 durch den Ventilstößel 63 verschlossen ist, ist somit stets sichergestellt, daß im oberen Zylinderraum 60 der höhere der beiden Drücke herrscht, d.h. daß der Kolben 16 nach unten gegen den Ventilsitz 20 gedrückt wird. Sofern das Betriebsbremsventil nicht betätigt wird, ist somit auch bei einem Ausfall der Bremselektronik sichergestellt, daß die Leitung 23 gegenüber dem Bremszylinder abgesperrt ist.

Die vier Schaltelemente 43-46 werden auf der einen Seite vom "steuernden Druck" beaufschlagt. Auf der anderen Seite jedes Schaltelementes wird der Durchfluß von einem Kanal in einen anderen zugelassen oder gesperrt, je nach Druckhöhe auf der steuernden Seite. Die Schaltelemente werden paarweise vom Bremszylinderdruck BZ bzw. vom Betriebsbremsventildruck BBV gesteuert. Ist der Bremszylinderdruck BZ kleiner als der Betriebsbremsventildruck BBV (Fig. 5), dann strömt der Betriebsbremsventildruck BBV über das Schaltelement 43 in den Steuerraum, d.h. den Zylinderraum 60 des Schaltkolbens 16. Weil der Abfluß über den mittig angeordneten "Min-Kanal", d.h. über die Öffnung 64, über das Schaltelement 44 (drittes von links) zum BZ-Druck durch das Magnetventil unterbunden wird, bleibt der Schaltkolben 16 in der Sperrstellung.

Wechseln die Druckverhältnisse von BZ und BBV (BBV < BZ), dann gibt das Schaltelement 46 den Durchgang vom BZ-Druck in die Steuerkammer 60 des Schaltkolbens 16 frei. Die Verbindung zum kleineren BBV-Druck über das Schaltelement 44 bleibt durch das Magnetventil unterbrochen.

Gibt das Magnetventil den "Min-Kanal", d.h. die Öffnung 64 frei, dann kann der Druck aus dem Steuerraum 60 des Schaltkolbens 16 abfließen und die Wirkung des höheren Druckes verschiebt den Schaltkolben 16 mit den integrierten Schaltelementen 43-46 nach oben. Dadurch wird die Verbindung zwischen BBV und BZ wieder hergestellt. Wichtig dabei ist, daß über den "Min-Kanal" mehr Luft abfließen kann als über einen der "Max-Kanäle" in die Steuerkammer des Schaltkolbens zufließt.

Es ist anzumerken, daß die in den Fig. 5, 6 dargestellten Schaltelemente, d.h. die Membranen, gleichzeitig auch Teil der Membran des Schaltkolbens 16 sein können, wie in Fig. 4 dargestellt. Alternativ dazu können die Schaltelemente auch durch einzelne Platten-Ventile gebildet sein.

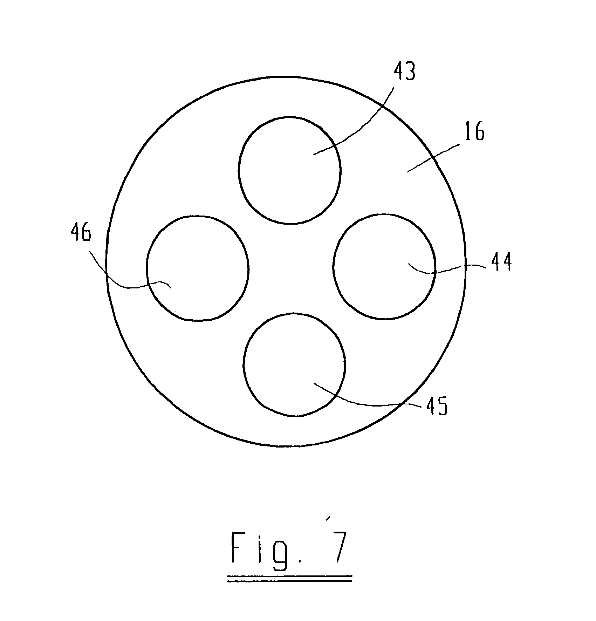

Fig. 7 zeigt in schematischer Darstellung eine mögliche Anordnung der in den Fig. 4-6 gezeigten Membranventile 43-46. Die Schaltelemente bzw. Membranventile 43-44 können entweder, wie in den Fig. 4-6 gezeigt, nebeneinanderliegend angeordnet sein, oder "auf einem Kreis liegend", wie in Fig. 7 gezeigt.

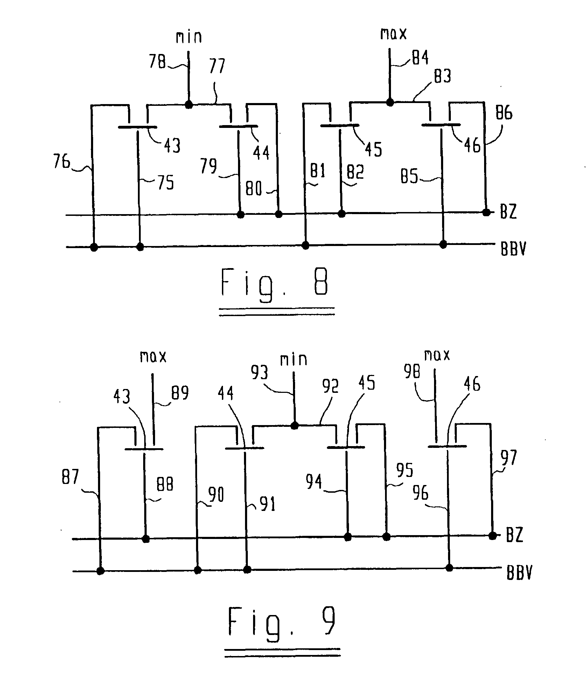

Die Fig. 8 und 9 zeigen in schematischer Darstellung zwei weitere Schaltungsvarianten der Membranventile 43-46.

Fig. 8 zeigt schematisch die Auswahl des Max/Min-Druckes aus dem anliegenden Betriebsbremsventildruck BBV bzw. des Bremszyiinderdruckes BZ, sowie die Kanalisierung zu "min" und "max".

In Fig. 8 sind im Gegensatz zum Ausführungsbeispiel der Fig. 4-6 die Niederdruckausgänge bzw. die Hochdruckausgänge, die hier durch "min" bzw. "max" gekennzeichnet sind, zusammengelegt. Das erste Membranventil 43 steht über zwei separate Leitungen 75, 76 mit dem Betriebsbremsventildruck BBV in Verbindung. Ferner besteht über eine Verbindungsleitung 77 eine Druckverbindung zum zweiten Membranventil 44. Die gemeinsame Verbindungsleitung 77 steht mit dem Niederdruckausgang 78 in Druckverbindung. Vom zweiten Membranventil 44 führen zwei separate Leitungen 79, 80 zum Zylinderraum, in dem der Bremszylinderdruck BZ herrscht. Das dritte Membranventil 45 steht über eine Leitung 81 mit BBV und über eine Leitung 82 mit BZ in Verbindung. Das dritte und vierte Membranventil sind über eine Verbindungsleitung 83, an die der Hochdruckausgang 84 angeschlossen ist, in Verbindung. Über eine Leitung 85 steht das vierte Membranventil 46 mit BBV in Druckverbindung und über eine Leitung 86 mit BZ.

Demgegenüber ist bei Fig. 9 nur der "Min"-Kanal zusammengeführt, was für die Funktion und die Integration in den Schaltkolben ausreicht. Es sind also einzelne Ausgänge teilweise zusammengelegt. Das erste Membranventil 43 steht über Leitungen 87, 88 mit BBV bzw. BZ in Verbindung. Ferner weist das Membranventil 43 einen Hochdruckausgang 89 auf. Das zweite Membranventil 44 steht über Leitungen 90, 91 mit BBV in Verbindung. Ferner ist zwischen dem zweiten Membranventil 44 und dem dritten Membranventil 45 eine Verbindungsleitung 92 vorgesehen, von der ein gemeinsamer Niederdruckausgang 93 abzweigt. Das dritte Membranventil 45 steht ferner über zwei separate Leitungen 94, 95 mit BZ in Verbindung. Das vierte Membranventil 46 steht über eine Leitung 96 mit BBV und über eine Leitung 97 mit BZ in Verbindung. Das Membranventil 46 weist ferner einen Hochdruck 98 auf.

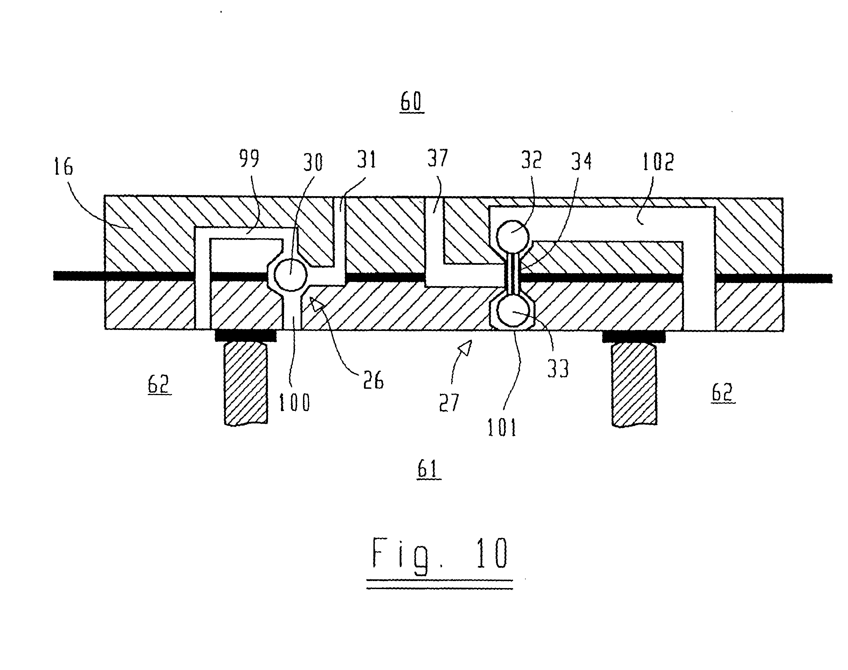

Fig. 10 zeigt ein weiteres Ausführungsbeispiel mit in den Schaltkolben 16 integrierter Druckauswahleinrichtung. Es ist auch hier ein Hochdruckauswahlventil 26 und ein Niederdruckauswahlventil 27 vorgesehen. Das Hochdruckauswahlventil 26 weist entsprechend Fig. 2 einen Ventilkörper 30 und das Niederdruckauswahlventil 27 zwei über eine Stange 34 miteinander verbundene Ventilkörper 32, 33 auf. Das Hochdruckauswahlventil 26 ist über eine Leitung 99 mit dem ringförmigen Zylinderraum 62 und über eine Stichleitung 100 mit dem Zylinderraum 61 verbunden. Ferner ist ein Hochdruckausgang 31 vorgesehen, der den oberen Zylinderraum 60 mit dem Hochdruckauswahlventil 26 verbindet. Das Niederdruckauswahlventil 27 steht über eine Öffnung 101 mit dem Zylinderraum 61 und über eine Leitung 102 mit dem ringförmigen Zylinderraum 62 in Druckverbindung. Zwischen dem Niederdruckauswahlventil 27 und dem oberen Zylinderraum 60 besteht ferner eine Druckverbindung über den Niederdruckausgang 37. Analog zum Ausführungsbeispiel der Fig. 2 sind auch hier zwei Fälle zu unterscheiden:

### Betriebsbremsventildruck BBV > Bremszylinderdruck BZ

In diesem Fall sperrt der Ventilkörper 30 des Hochdruckauswahlventils 26 die Leitung 99 ab. Folglich besteht eine Druckverbindung zwischen dem oberen Zylinderraum 60 und dem Zylinderraum 61, d.h. im oberen Zylinderraum herrscht der höhere Druck BBV.

### BBV < BZ

In diesem Fall sperrt das Hochdruckauswahlventil die Stichleitung 100 ab, d.h. es besteht über die Leitung 99 und das Hochdruckauswahlventil 26 eine Druckverbindung zwischen dem ringförmigen Zylinderraum 62 und dem oberen Zylinderraum 60.

Es liegt somit gleiche "Schaltfunktion" des Schaltkolbens 16 vor, wie bei den in den Fig. 4-6 dargestellten Membranventilen.

## Patentansprüche

1. Bremsdruckregelvorrichtung für Fahrzeuge, insbesondere Nutzfahrzeuge, mit einem Betriebsbremsventil (1) zum Vorgeben eines Bremsdruckes, das einen elektrischen Ausgang (4) zum Ansteuern von Bremsdruckventilen (9, 10) und einen pneumatischen Ausgang (3) aufweist,
- einem vom Betriebsbremsventil (1) elektrisch ansteuerbaren Be- und/oder Entlüftungsventil (9; 10) zum Druckbeaufschlagen bzw. zum Entlüften eines Bremszylinders (7),
- einem Steuerventil (5), das zwischen dem pneumatischen Ausgang (3) des Betriebsbremsventils (1) und dem Bremszylinder (7) angeschlossen ist und das bei einer elektronischen Bremsdrucksteuerung den pneumatischen Ausgang (3) gegenüber dem Bremszylinder (7) absperrt und bei einem Ausfall der Elektronik durchsteuert,
**dadurch gekennzeichnet daß** :
- das Steuerventil (5) einen Schaltkolben (16) aufweist, der mit Bremszylinderdruck (BZ) und Betriebsbremsventildruck (BBV) beaufschlagt ist,
- dem Steuerventil (5) eine Druckauswahleinrichtung (24) zugeordnet ist, die einen Hochdruckausgang (31) und einen Niederdruckausgang (37) aufweist, an denen der höhere bzw. niedrigere der beiden Drücke (BZ, BBV) ansteht und
- wobei eine erste Schaltkolbenseite (17) genau mit einem der beiden Drücke (BZ;BBV) und die zweite Schaltkolbenseite (18) auf einer Teilfläche (21) mit Betriebsbremsventildruck (BBV) und auf einer anderen Teilfläche (22) mit Bremszylinderdruck (BZ) beaufschlagt ist.

2. Bremsdruckregelvorrichtung nach Anspruch 1, **dadurch gekennzeichnet,**
- **daß** dem Steuerventil (5) ein Magnetventil (25) zugeordnet ist, das bei einer elektronisch gesteuerten Betriebsbremsung den höheren der beiden Drücke (BBV; BZ) und bei einem Ausfall der Bremselektronik den niedrigeren der beiden Drücke (BBV,; BZ) zur ersten Schaltkolbenseite (17) durchsteuert.

3. Bremsdruckregelvorrichtung nach Anspruch 2, **dadurch gekennzeichnet,**
**daß** das Magnetventil (25) einen federvorgespannten Magnetanker (41) aufweist, der in erregtem Zustand den Niederdruckausgang (37) und in nicht erregtem Zustand den Hochdruckausgang (31) sperrt.

4. Bremsdruckregelvorrichtung nach einem der Ansprüche 1 bis 3, **dadurch gekennzeichnet,**
**daß** die Druckauswahleinrichtung (24) in den Schaltkolben (16) integriert ist. (Fig. 4-6, 10)

5. Bremsdruckregelvorrichtung nach einem der Ansprüche 1 bis 3, **dadurch gekennzeichnet,**
**daß** die Druckauswahleinrichtung (24) vom Schaltkolben (16) separiert angeordnet ist. (Fig. 2)

6. Bremsdruckregelvorrichtung nach einem der Ansprüche 1 bis 5, **dadurch gekennzeichnet,**
**daß** die Druckauswahleinrichtung (24) durch ein Hochdruckauswahlventil (26) und ein Niederdruckauswahlventil (27) gebildet ist, wobei das Hochdruckauswahlventil (26) einen einzelnen Ventilkörper (30) aufweist und den niedrigeren der beiden Drücke (BBV, BZ) gegenüber dem Hochdruckausgang (31) absperrt und wobei das Niederdruckauswahlventil (27) einen doppelt wirkenden Ventilkörper (32, 33, 34) aufweist, der den höheren der beiden Drücke gegenüber dem Niederdruckausgang (37) absperrt.

7. Bremsdruckregelvorrichtung nach einem der Ansprüche 1 bis 6, **dadurch gekennzeichnet, daß** die Druckauswahleinrichtung (24) Ventilkörper (30; 32; 33) aufweist, die kugelförmig sind. (Fig. 2)

8. Bremsdtuckregelvorrichtung nach einem der Ansprüche 1 bis 7, **dadurch gekennzeichnet,**
**daß** die Druckauswahleinrichtung (24) durch mehrere Membranventile (43-46) gebildet ist (Fig. 3-6).

9. Bremsdruckregelvorrichtung nach Anspruch 8, **dadurch gekennzeichnet,**
**daß** die Membranventile (43-46) eine einstückige Membran (47) aufweisen.

10. Bremsdruckregelvorrichtung nach Anspruch 8 oder 9, **dadurch gekennzeichnet,**
**daß** der Schaltkolben (16) durch zwei Schaltkolbenhälften (16a, 16b) gebildet ist, zwischen denen die Membran (47) eingespannt ist (Fig. 4-6).

11. Bremsdruckregelvorrichtung nach Anspruch 10, **dadurch gekennzeichnet,**
**daß** die Membran (47) seitlich aus dem Schaltkolben (16) ragt und druckdicht mit einer Innenseite eines Gehäuses (19) des Steuerventils (5) verbunden ist, in dem der Schaltkolben (16) angeordnet ist.

12. Bremsdruckregelvorrichtung nach einem der Ansprüche 1 bis 11, **dadurch gekennzeichnet,**
**daß** die eine der Teilflächen (21, 22) eine Kreisfläche und die andere Teilfläche eine Ringfläche ist (Fig. 2, 4-6).

## Claims

1. Brake pressure regulating device for vehicles, specifically commercial vehicles, comprising
- a service brake valve (1) for predetermining a brake pressure, which includes an electrical output (4) for controlling brake pressure valves (9, 10) and a pneumatic output (3),
- an aeration and/or venting valve (9; 10) adapted to be electrically controlled by said service brake valve (1) for applying pressure to or for venting a brake cylinder (7), respectively,
- a control valve (5) connected between said pneumatic output (3) of said service brake valve (1) and said brake cylinder (7) and which, with an electronic brake pressure control operation, isolates said pneumatic output (3) from said brake cylinder (7) and which controls in the case of failure of the electronic system,
**characterised in that**:
- said control valve (5) comprises a shifting piston (16) subjected to the pressure in said brake cylinder (BZ) and to the pressure in said service brake valve (BBV),
- a pressure selector means (24) is associated with said control valve (5), which comprises a high-pressure output (31) and a low-pressure output (37) to which the higher or the lower one of said two pressures (BZ, BBV) is applied, respectively, and
- wherein a first shifting piston side (17) is subjected precisely to one of said two pressures (BZ; BBV) whilst the second shifting piston side (18) is subjected to the pressure of said service brake valve (BBV) on one sub-area (21) whereas it is subjected to the pressure of said brake cylinder (BZ) on the other sub-area (22).

2. Brake pressure regulating device according to Claim 1, **characterised in that**
- a solenoid valve (25) is associated with said control valve (5), which, in the case of service brake application under electronic control, controls the higher one of said two pressures (BBV; BZ) and, in the event of failure of the electronic brake system, controls the lower one of said two pressures (BBV; BZ) to the first shifting piston side (17).

3. Brake pressure regulating device according to Claim 2, **characterised in that** said solenoid valve (25) comprises a spring-biased solenoid armature (41) that inhibits said low-pressure output (37) in the excited state and inhibits said high-pressure output (31) I the non-excited state.

4. Brake pressure regulating device according to any of the Claims 1 to 3, **characterised in**
**that** said pressure selector means (24) is integrated into said shifting piston (16) (Figs. 4 to 6, 10).

5. Brake pressure regulating device according to any of the Claims 1 to 3, **characterised in**
**that** said pressure selector means (24) is disposed to be separate from said shifting piston (16).

6. Brake pressure regulating device according to any of the Claims 1 to 5, **characterised in**
**that** said pressure selector means (24) is constituted by a high-pressure selector valve (26) and a low-pressure selector valve (27), with said high-pressure selector valve (26) including a single valve ,body (30) and shuts off the lower one of said two pressures (BBV; BZ) relative to said high-pressure output (31) and with said low-pressure selector valve (27) including a double-action valve body (32, 33, 34) shutting off the higher one of said two pressures relative to said low-pressure output (37).

7. Brake pressure regulating device according to any of the Claims 1 to 6, **characterised in**
**that** said pressure selector means (24) comprises valve bodies (30; 32; 33) having a spherical shape (Fig. 2).

8. Brake pressure regulating device according to any of the Claims 1 to 7, **characterised in**
**that** said pressure selector means (24) is constituted by a plurality of diaphragm valves (43 to 46) (Figs. 3 to 6).

9. Brake pressure regulating device according to Claim 8, **characterised in that** said diaphragm valves (43 to 46) include a one-piece diaphragm (47).

10. Brake pressure regulating device according to Claim 8 or 9, **characterised in that** said shifting piston (16) is constituted by two halves of the shifting piston (16a, 16b), between which said diaphragm (47) is clamped (Figs. 4 to 6).

11. Brake pressure regulating device according to Claim 10, **characterised in that** said diaphragm (47) projects laterally from said shifting piston (16) and is connected to an inner side of a housing (19) of said control valve (5), in which said shifting piston (16) is disposed.

12. Brake pressure regulating device according to any of the Claims 1 to 11,
**characterised in**
**that** one of said sub-areas (21, 22) is a circular area whilst the other sub-area is an annular area (Figs. 2, 4 to 6).

## Revendications

1. Dispositif régulateur de pression de freinage pour véhicules, en particulier des véhicules utilitaires, comprenant
- a clapet de frein de service (1) à prédéterminer une pression de freinage, qui renferme une sortie électrique (4) à commander des clapets de pression de freinage (9, 10) et une sortie pneumatique (3),
- une soupape d'aérage et/ou de purge d'air (9; 10) apte à être commandé de façon électrique par ledit clapet de frein de service (1) afin d'appliquer une pression à un cylindre de frein (7) ou respectivement d'en purger de l'air,
- une vanne pilote (5) branchée entre ladite sortie pneumatique (3) dudit clapet de frein de service (1) et ledit cylindre de frein (7), qui, à une opération de commande électronique de la pression de freinage, coupe ladite sortie pneumatique (3) dudit cylindre de frein (7) et qui est en pleine commande au cas de défaillance du système électronique,
**caractérisé en ce:**
- **que** ladite vanne pilote (5) comprend un piston de commande (16) soumis à la pression dans ledit cylindre de frein (BZ) et à la pression dans ledit clapet de frein de service (BBV),
- **qu'**un moyen sélecteur de pression (24) est affecté à ladite vanne pilote (5), qui comprend une sortie à haute pression (31) et une sortie à basse pression (37), auxquelles la pression plus haute ou la pression plus basse desdites deux pressions (BZ, BBV) est respectivement appliquée, et
- dans lequel un premier côté du piston de commande (17) est soumis précisément à une desdites deux pressions (BZ; BBV) pendant que l'autre côté du piston de commande (18) est soumis à la pression dudit clapet de frein de service (BBV) à une aire partielle (21), pendant qu'il est soumis à la pression dudit cylindre de frein (BZ) à l'autre aire partielle (22).

2. Dispositif régulateur de pression selon la revendication 1, **caractérisé en ce**
- **qu'**une électrovanne (25) est affectée à ladite vanne pilote (5), qui, au cas de serrage du frein de service sous commande électronique, commande la plus haute pression parmi lesdites deux pressions (BBV; BZ) et, au cas de défaillance du système électronique de freinage, commande la plus basse pression parmi lesdites deux pressions (BBV; BZ) vers le premier côté du piston de commande (17).

3. Dispositif régulateur de pression selon la revendication 2, **caractérisé en ce**
**que** ladite électrovanne (25) comprend une armature mise en précontrainte par un ressort (41), qui désactive ladite sortie à basse pression (37) en état excité, et désactive ladite sortie à haute pression (31) I en état non excité.

4. Dispositif régulateur de pression selon une quelconque des revendications 1 à 3, **caractérisé en ce**
**que** ledit moyen sélecteur de pression (24) est intégré dans ledit piston de commande (16) (figs. 4 à 6, 10).

5. Dispositif régulateur de pression selon une quelconque des revendications 1 à 3, **caractérisé en ce**
**que** ledit moyen sélecteur de pression (24) est disposé de façon à être séparé dudit piston de commande (16).

6. Dispositif régulateur de pression selon une quelconque des revendications 1 à 5, **caractérisé en ce**
**que** ledit moyen sélecteur de pression (24) est constitué par une vanne de sélection à haute pression (26) et une vanne de sélection à basse pression (27), à ladite vanne de sélection à haute pression (26) renfermant un seul corps de vanne (30) et arrête la pression plus basse desdites deux pressions (BBV; BZ) relativement à ladite sortie à haute pression (31), et à ladite vanne de sélection à basse pression (27) renfermant un corps de vanne à effet double (32, 33, 34) arrêtant la pression plus haute desdites deux pressions relativement à ladite sortie à basse pression (37).

7. Dispositif régulateur de pression selon une quelconque des revendications 1 à 6, **caractérisé en ce**
**que** ledit moyen sélecteur de pression (24) comprend des corps de vanne (30; 32; 33) en une forme sphérique (Fig. 2).

8. Dispositif régulateur de pression selon une quelconque des revendications 1 à 7, **caractérisé en ce**
**que** ledit moyen sélecteur de pression (24) est constitué par une pluralité des soupapes à diaphragme (43 à 46) (figs. 3 à 6).

9. Dispositif régulateur de pression selon la revendication 8, **caractérisé en ce**
**que** lesdites soupapes à diaphragme (43 à 46) renferment un diaphragme monocorps (47).

10. Dispositif régulateur de pression selon la revendication 8 or 9, **caractérisé en ce**
**que** ledit piston de commande (16) est constitué par deux moitiés de piston de commande (16a, 16b), entre lesquelles est serré ledit diaphragme (47) (figs. 4 à 6).

11. Dispositif régulateur de pression selon la revendication 10, **caractérisé en ce**
**que** ledit diaphragme (47) fait saillie latéralement dudit piston de commande (16) et est relié à une face intérieure d'un carter (19) de ladite vanne pilote (5), dans lequel est disposé ledit piston de commande (16).

12. Dispositif régulateur de pression selon une quelconque des revendications 1 à 11, **caractérisé en ce**
**qu'**une desdites aires partielles (21, 22) est une aire circulaire, pendant que l'autre aire partielle est une aire annulaire (figs. 2, 4 à 6).
